# EUROPÄISCHE PATENTSCHRIFT

(11) **EP 0 596 383 B1**
(45) Veröffentlichungstag und Bekanntmachung des Hinweises auf die Patenterteilung: **28.01.1998**
(21) Anmeldenummer: 93117305.8
(22) Anmeldetag: 26.10.1993
(51) Int. Cl.: C09B 67/44, C09B 47/26

(54) **Kupferphthalocyanin-Flüssigformierung**
Copper phthalocyanine-liquid formulation
Formulation liquide de phthalocyanine du cuivre

(30) Priorität: 06.11.1992 DE 4237545
(43) Veröffentlichungstag der Anmeldung: 11.05.1994
(73) Patentinhaber: BAYER AG, 51368 Leverkusen (DE)
(72) Erfinder: Wunderlich, Klaus, D-51373 Leverkusen (DE)

(56) Entgegenhaltungen:
- EP-A- 0 184 991
- EP-A- 0 196 901
- DE-A- 2 155 779
- DE-A- 2 629 675
- DE-A- 2 842 187
- PATENT ABSTRACTS OF JAPAN, unexamined applications, C Sektion, Band 14, Nr. 80, 15. Februar 1990 THE PATENT OFFICE JAPANESE GOVERNMENT Seite 80 C 689; & JP-A-1-297 468 (NIPPON KAYAKU CO)

## Beschreibung

Die vorliegende Erfindung betrifft stabile wäßrige Lösungen von Kupferphthalocyaninfarbstoffen und deren Verwendung zum Färben von cellulosehaltigen Materialien.

Flüssige Farbstoffzubereitungen z.B. von Kupferphthalocyanin-Farbstoffen stellen im allgemeinen die bevorzugten Handelsformen der zum Färben von cellulosehaltigen Materialien insbesondere von Papier verwendeten Farbstoffe dar. Diese flüssigen Farbstoffzubereitungen sind im allgemeinen wäßrige Lösungen mit einem Farbstoffgehalt von ca. 5-25 Gew.-%, die durch Zugabe von organischen Lösungsmitteln hergestellt werden. Dabei dient das organische Lösungsmittel zur Stabilisierung der Lösung und auch zur Erzielung praxisgemäßer Farbstoffkonzentration.

An die Stabilität der Flüssigformierungen erden dabei hohe Anforderungen gestellt. Auch nach längerer Lagerung darf keinerlei Ausfällung oder Auskristallisation eintreten.

Bei der Anwendung dieser flüssigen Farbstoffzubereitungen z.B. beim Färben von Papier gelangen diese organischen Lösungsmittel jedoch in das Abwasser und stellen somit eine ökologische Belastung dar.

Ziel der vorliegenden Erfindung war es stabile, konzentrierte, wäßrige Lösungen von anionischen, basische Gruppen aufweisenden Kupferphthalocyanin-Farbstoffen bereitzustellen, die frei von organischen Lösungsmitteln sind.

Gegenstand der vorliegenden Erfindung ist eine konzentrierte wäßrige Farbstoff Lösung dadurch gekennzeichnet, daß sie eine oder mehrere Kupferphthalocyanin-Verbindungen enthält, die in Form der freien Säure der Formel 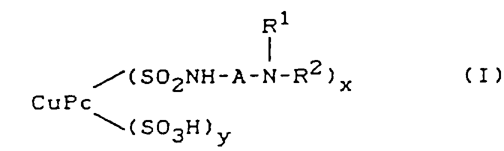 worin
- CuPc: für einen Kupferphthalocyanin-Rest steht,
- A: für gegebenenfalls substituiertes geradkettiges oder verzweigtes C₂-C₆-Alkylen steht,
- R¹ und R²: unabhängig voneinander für Wasserstoff, jeweils gegebenenfalls substituiertes geradkettiges oder verzweigtes C₁-C₆-Alkyl oder C₁-C₆-Hydroxyalkyl stehen, mit der Maßgabe, daß mindestens ein Rest R¹ oder R² für gegebenenfalls substituiertes C₁-C₆-Hydroxyalkyl steht,
- x: für 1 bis 3,5 steht,
- y: für 0,5 bis 3 steht, und die Summe von x und y 2,5 bis 4 beträgt,
entsprechen, und einen pH-Wert von 8 bis 13, vorzugsweise von 11 bis 13, aufweist
wobei als Substituenten für geradkettiges oder verzweigtes C₂-C₆-Alkylen in der Definition von A OH oder C₁-C₆-Alkoxy und
als Substituenten für geradkettiges oder verzweigtes C₁-C₆-Alkyl und C₁-C₆-Hydroxyalkyl in der Definition von R¹ und R² OH, C₁-C₆-Alkoxy, Amino, C₁-C₆-Alkylamino, C₁-C₆-Dialkylamino oder Sulfato in Frage kommen.

Aus JP-A 01 297 468 sind bereits wäßrige Farbstoff-Formierungen von bestimmten Hydroxylgruppen-freien Kupferphthalocyaninfarbstoffen mit einem pH-Wert zwischen 8 und 13 bekannt geworden, die zum Färben von Papier verwendet werden können. Wie aus den Beispielen der JP-A 01 297 468 hervorgeht, kann jedoch in den meisten Fällen auf den Zusatz organischer Lösungsmittel nicht verzichtet werden, oder es wird trotz erfolgter Zwischenisolierung nur eine 10 %ige Einstellung erreicht.

Die erfindungsgemäß eingesetzten Farbstoffe der Formel (I) zeichnen sich überraschenderweise gegenüber denen der JP-A 01 297 468 durch deutlich bessere Löslichkeit im für die erfindungsgemäße Farbstoff-Formierung angegebenen pH-Bereich aus.

In DE-A-26 29 675 sind wäßrige Farbstoffpräparationen von bestimmten Hydroxygruppen-freien Kupferphthalocyaninfarbstoffen beschrieben, deren pH-Wert bei 4 und 5 liegt.

Die EP-A-0 184 991 beansprucht die Verwendung kationischer Phthalocyaninverbindungen zum Färben und Bedrucken von mit kationischen Farbstoffen färbbaren Substraten. Die kationischen Phthalocyaninverbindungen werden durch Quaternierung bestimmter Ausgangsverbindungen erhalten.

Aus der DE-A-2 842 187 ist ein Verfahren zum Färben und Bedrucken von mit Wasser mischbaren Ouellmitteln gequollenen Cellulosefasern oder diese enthaltenden Mischfasern mit bestimmten Kupferphthalocyanin-Verbindungen bekannt.

Bevorzugt sind erfindungsgemäße Farbstoff-Lösungen die eine oder mehrere Kupferphthalocyanin-Verbindungen der Formel (I), worin
- A: für Ethylen oder Propylen steht,
- R¹: für Wasserstoff oder gegebenenfalls durch Hydroxy substituiertes, geradkettiges oder verzweigtes C₁-C₃-Alkyl steht, und
- R²: für -CH₂CH₂OH steht,
enthalten.

Besonders bevorzugt sind erfindungsgemäße Farbstoff-Lösungen die eine oder mehrere Verbindungen der Formel (II) 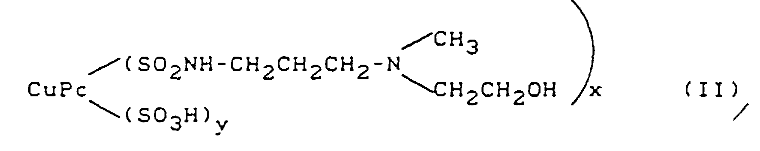 worin
- CuPc, x und y: die für Formel (I) angegebene Bedeutung haben,
enthalten.

Vorzugsweise handelt es sich bei den erfindungsgemäßen wäßrigen Farbstoff-Lösungen umsolche mit einem Gehalt an Farbstoff der Formel (I) von 5 bis 25 Gew.-%, vorzugsweise 10 bis 25 Gew.-%.

Die erfindungsgemäßen Farbstoff-Lösungen zeichnen sich durch eine gute Lagerstabilität von beispielsweise 6 Wochen bei -2°C oder +40°C aus.

Die erfindungsgemäßen Farbstoff-Lösungen können hergestellt werden, indem der Farbstoff der Formel (I) in Wasser unter Zusatz von anorganischen und/oder organischen Basen gelöst wird. Es ist auch möglich, die bei der Herstellung des Farbstoffs der Formel (I) anfallende Syntheselösung oder -suspension ohne Zwischenisolierung des Farbstoffs durch Zusatz von anorganischen und/oder organischen Basen und gegebenenfalls Wasser in die erfindungsgemäßen Farbstoff-Lösungen zu überführen. Auf löslichkeitsverbessernde organische Zusätze kann dabei zumeist völlig verzichtet werden.

Die Syntheselösung oder -suspension kann zuvor durch Anwendung von Membranverfahren wie beispielsweise Ultrafiltration, Mikrofiltration und Reversosmose oder deren Kombinationen gereinigt und entsalzt und anschließend durch Basenzusatz in die erfindungsgemäße Farbstoff-Lösung überführt werden.

Die erfindungsgemäßen Farbstoff-Lösungen können übliche Zusätze wie beispielsweise Tenside, Fungizide enthalten.

Als anorganische bzw. organische Basen seien beispielsweise genannt:
Hydroxide, Carbonate und Hydrogencarbonate von Lithium, Natrium, Kalium, Ammonium;
Organische Amine wie Monoethanol-, Diethanol-, Triethanol-, 3-Propanol-, 2-Propanol-, Dipropanol-, Tripropanol-, Triisopropanol-, Diethyl-, Triethyl-, Methyldiethanol-, Ethyldiethanol-, N-Methylethanol-, N-Ethylethanol-, N,N-Dimethylethanol-, N,N-Diethylethanol-, N-Phenylethanolamin. Vorzugsweise werden für die Einstellung des pH-Wertes der erfindungsgemäßen Farbstoff-Lösungen Alkalihydroxide verwendet, insbesondere Natriumhydroxid.

Die in den erfindungsgemäßen Farbstoff-Lösungen enthaltenen Kupferphthalocyanin-Verbindungen entsprechen in Form der freien Säure der Formel (I). Vorzugsweise handelt es sich bei den Verbindungen (I) um Salze dieser freien Säuren mit organischen oder anorganischen Basen. Als Basen kommen dabei bevorzugt die oben genannten organischen und anorganischen Basen in Frage.

Als löslichkeitsverbessernde organische Zusätze kommen beispielsweise infrage: Die oben aufgeführten organisehen Amine sowie weiterhin Säureamidverbindungen wie Harnstoff, Alkylharnstoff oder ε-Caprolactam und weiterhin wasserlösliche organische Lösungsmittel wie z.B. Ethylen-, Diethylen-, Triethylen-, Polyethylen-, Propylen-, Dipropylen-, Polypropylen-, Butylenglykol, Methylcellosolve, Carbitol, Methylcarbitol, Dimethylether, Ethylen-, Diethylen-, Triethylenglykolmonobutylether, Triethylen-, Propylenglykolmonomethylether, Butylpolyglykol, Phenyl-, Hexylen-, Thioglykol, Glycerin, Tetrahydrofuran, Dioxan, Butyrolacton, N-methyl-2-pyrrolidon, Formamid, Dimethylformamid, Methyl, Ethyl-, Propyl- und Butylalkohol.

Vorzugsweise sind die erfindungsgemäßen Farbstoff-Lösungen jedoch frei von löslichkeitsverbessernden organischen Zusätzen.

Die Herstellung der Kupferphthalocyanin-Verbindungen der Formel (I) kann in üblicher, an sich bekannter Weise durch Kondensation von Kupferphthalocyanin-sulfochloriden oder-sulfochlorid-sulfonsäuren mit einem Amin der Formel 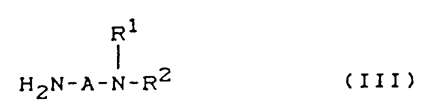 worin
- A, R¹ und R²: die oben angegebene Bedeutung haben,
und gegebenenfalls anschließender Verseifung überschüssiger Sulfochlorid-Gruppen, erfolgen.

Aus der erhaltenen Rohfarbstofflösung oder -suspension kann der Farbstoff durch übliche Methoden wie z.B. Aussalzen und Filtrieren oder durch die bereits oben erwähnten Membrantrennverfahren isoliert werden. In den meisten Fällen ist eine Zwischenisolierung jedoch nicht erforderlich.

Die vorliegende Erfindung betrifft weiterhin die Verwendung der erfindungsgemäßen Farbstoff-Lösungen zum Färben und Bedrucken von cellulosehaltigem Material, insbesondere von Papier und Zellstoff.

Für das Färben von Papieren und Zellstoffen bestehen im allgemeinen folgende Möglichkeiten:
(a) Massefärbung, bei der die Farbstoffe bei oder nach dem Mahlen des Zellstoffs der noch nicht zum Papier verarbeiteten Stoffmasse zugesetzt werden.
(b) Oberflächenfärbung, bei der die Farbstoffe während des Papierleimungsvorgangs der Leimungsflotte zugegeben werden.

Außerdem kommen noch die Methoden infrage, bei denen eine Streichmasse aus Farbstoffen, anorganischen Weißpigmenten, Bindern und gegebenenfalls weiteren Zusätzen auf die Papieroberfläche aufgetragen wird.

Die erfindungsgemäße Farbstoff-Lösungen ist für jede der Färbemethode, vorzugsweise aber für die Massefärbung geeignet.

Beim Massefärben wird zunächst der Zellstoff auf einen bestimmten Mahlgrad gemahlen. Dann wird 0,01 - 2,0 % der erfindungsgemäßen Farbstoff-Lösung bei 10 - 40°C der Stoffmasse zugesetzt, wobei im allgemeinen 0,01 - 2,0 % Wirkstoffmenge, bezogen auf das Trockengewicht der Masse eingesetzt werden. Bei Bedarf werden außerdem übliche Leimungsmittel, Aluminiumsulfate, Papierverstärker, Fixiermittel u.a. nachgesetzt. Anschließend wird die Masse den üblichen Papierherstellungs- und Trocknungsvorgängen unterzogen. Auf diese Weise wird ein gleichmäßig brillant türkisblau gefärbtes Papier erhalten, das keine Melierung aufweist.

Bei der Oberflächenfärbung in der Leimpresse wird der Zellstoff ebenfalls vorerst auf einen bestimmten Mahlgrad gemahlen.

Dann werden nach Bedarf übliche Füllstoffe, Leimungsmittel, Aluminiumsulfate, Fixiermittel usw. der Stoffmasse zugesetzt. Anschließend wird die Stoffmasse nach üblicher Methode zum Papier verarbeitet. Danach wird das Papier in der Leimpresse mit einer Leimungsflotte die die erfindungsgemäße Farbstoff-Lösung enthält behandelt und anschließend getrocknet. Auf diese Weise wird ein brillant türkisblau gefärbtes Papier erzielt.

Dabei beträgt der Gehalt an Kupferphthalocyanin-Verbindung der Formel (I) in der Leimpressenflotte gewöhnlich 0,04 - 2,0 % (errechnet auf Basis Reingehalt), die Auflage der Streichmasse in der Regel 1-3 g/m² (Festgehalt), bezogen auf das Trockengewicht des Papiers.

Die erfindungsgemäße Farbstoff-Lösung zeigt hohe Affinität zur Cellulosefaser und ergibt damit eine gute Farbausbeute (hohe Farbtiefe). Die gefärbten Papiere zeichnen sich durch gute Wasser- und Ausblutechtheit aus.

Die folgenden Beispiele sollen die vorliegende Erfindung erläutern.

Die Angabe "Teile" bezieht sich immer, falls nichts anderes angegeben, auf Gewichtsteile.

### Beispiel 1

143,6 Teile Kupferphthalocyanin 96 %ig (= 137,9 Teile 100 %ig) werden innerhalb 1 Stunde unter Rühren in 748,3 Teile Chlorsulfonsäure eingetragen und innerhalb von 1,5 Stunden auf 138°C erwärmt. Nach 8 Stunden Rühren bei 138°C wird auf 85°C abkühlen lassen und während 2 Stunden bei 85 bis 88°C tropfenweise mit 94,4 Teilen Thionylchlorid versetzt. Anschließend wird auf 90 bis 92°C erwärmt und 4 Stunden bei dieser Temperatur gerührt. Nach Abkühlung auf 20 bis 30°C wird die Reaktionsmischung unter Rühren auf eine Mischung aus 1000 Teilen Wasser und 1000 Teilen Eis ausgetragen. Durch laufende Zugabe von 1500 Teilen Eis wird die Temperatur bei -2°C bis 0°C gehalten. Es wird abgesaugt und mit 1200 Teilen Eiswasser (900 Teile Wasser und 300 Teile Eis) gewaschen.

Der feuchte Nutschkuchen wird in 250 Teile Wasser und 250 Teile Eis eingerührt und bei 0°C durch Zugabe 15 %iger Natronlauge auf einen pH-Wert von 7 gebracht. Nach Zugabe von 100 Teilen Eis werden in 15 Minuten 95,2 Teile N-Methyl-N-(3-N-Methyl-N-(3-aminopropyl)-ethanolamin zugetropft. Hierbei steigt der pH-Wert auf 10,5. Durch Zutropfen von 15 %iger Natronlauge wird der pH-Wert auf 10,8 bis 11,0 eingesellt. Man läßt die Temeratur innerhalb 1 Stunde auf 20 bis 25°C ansteigen und hält dann 3 Stunden bei 20 bis 25°C. Während dieser Zeit wird der pH-Wert durch Zutropfen 15 %iger Natronlauge bei 10,8 bis 11,0 gehalten. Anschließend wird in 1 Stunde auf 60°C erwärmt und anschließend 1 Stunde bei dieser Temperatur gerührt (pH-Wert immer bei 10,8 bis 11,0). Nach dem Abkühlen auf 20 bis 25°C wird durch Zugabe von 15 %iger Natronlauge der pH-Wert auf 12,0 gebracht. Die Lösung wird mit 10 Teilen eines handelsüblichen Klärhilfsmittels auf Kieselgur-Basis (z.B. Dicalite®) versetzt. Es wird nach 0,5 Stunden Rühren abfiltriert und der Klärrückstand mit 50 Teilen Wasser gewaschen. Nach Zugabe von 100 Teilen Wasser zum Filtrat werden ca. 2040 Teile einer erfindungsgemäßen Flüssigformulierung erhalten, die den Farbstoff, der in der Form seiner freien Säure der ungefähren Formel 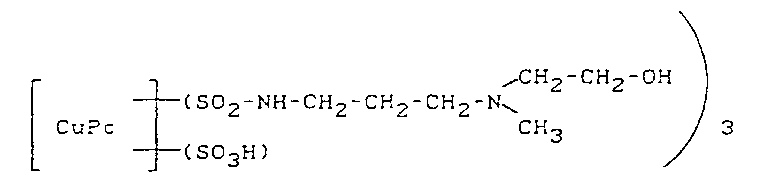 entspricht, als stabile ca. 14,5 %ige Lösung enthält (λₘₐₓ: 625, 664 - H₂O/pH 12,5).

### Beispiel 2

Eine Mischung aus 50 % gebleichtem Kiefernsulfat-Zellstoff und 50 % gebleichtem Birkensulfat-Zellstoff wird bei einer Stoffdichte von 2,5 % auf einen Mahlgrad von 36° SR gemahlen.

Zu 200 g dieser Suspension, enthaltend 5 g Zellstoff, gibt man in einem Becherglas 20 ml einer 0,5 %igen wäßrigen Lösung der erfindungsgemäßen Farbstofflösung aus Beispiel 1 (2 % bezogen auf Zellstoff) und rührt 5 Minuten. Anschließend setzt man 10 ml einer 1 %igen Harzleim-Lösung zu, nach einer weiteren Minute 15 ml einer 1 %igen Aluminiumsulfat-Lösung, verdünnt mit 800 ml Wasser und rührt weitere 3 Minuten.

Aus dieser Zellstoffsuspension bildet man ein Papierblatt auf einem Handblattbildner, preßt das erhaltene Blatt in einer Handpresse ab und trocknet auf einem Trockenzylinder 10 Minuten bei 100°C unter zweimaligem Wenden.

Die so erhaltene Papierfärbung zeigt ein brillantes Türkisblau in hoher Farbtiefe und weist eine sehr gute Ausblut- und Lichtechtheit auf. Das anfallende Siebwasser zeigt nur eine sehr geringe Anfärbung mit Farbstoff.

### Beispiel 3

Um das verbesserte Melierverhalten zu zeigen, wird Beispiel 2 wiederholt mit der einzigen Änderung, daß bei der Zugabe der erfindungsgemäßen Farbstoff-Lösung auf das Rühren verzichtet wird. Auch in diesem Fall wird eine sehr gleichmäßige Papierfärbung ohne Melierung erhalten.

### Beispiel 4

Ersetzt man im Beispiel 1 die eingesetzten 95,2 Teile N-Methyl-N-(3-aminopropyl)-ethanolamin durch 63,5 Teile des gleichen Amins und verfährt sonst gleichermaßen, so erhält man eine erfindungsgemäße stabile Lösung eines Farbstoffs, der in Form seiner freien Säure der ungefähren Formel 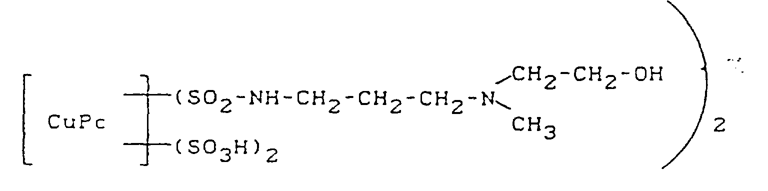 entspricht (λₘₐₓ: 622, 661 - H₂O/pH 12,5). Auch diese Farbstoff-Lösung liefert z.B. nach dem Verfahren des Beispiel 2 eine gleichmäßige, brillante türkisblaue Färbung.

### Beispiel 5

Ersetzt man im Beispiel 1 die eingesetzten 95,2 Teile N-Methyl-N-(3-aminopropyl)-ethanolamin durch 117,6 Teile N,N-Bis(hydroxethyl)-trimethylendiamin und verfährt sonst gleichermaßen, so erhält man eine erfindungsgemäße stabile Lösung eines Farbstoffs, der in Form seiner freien Säure der ungefähren Formel 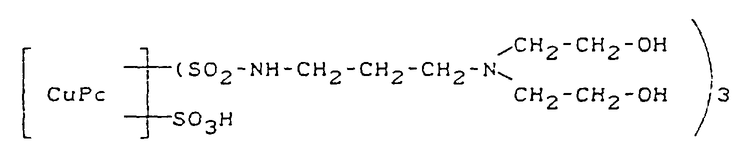 entspricht und Papiermasse in brillanten türkisblauen Tönen anfärbt.

Ersetzt man in obigem Beispiel die eingesetzten 117,6 Teile N,N-Bis(hydroxyethyl)trimethylendiamin durch 117,6 Teile N,N-Bis(hydroxyethyl)-ethylendiamin, so erhält man eine stabile Lösung eines Farbstoffes mit vergleichbaren färberischen Eigenschaften.

### Beispiel 6

35,9 Teile Kupferphthalocyanin 96 %ig (34,5 g 100 %ig) werden in 1 Std. in 189 Teile Chlorsulfonsäure unter Rühren eingetragen und innerhalb 1,5 Stunden auf 138°C erwärmt und anschließend noch 8 Stunden bei dieser Temperatur gerührt. Nach Abkühlung auf 20 bis 30°C wird das Reaktionsgemisch unter Rühren auf eine Mischung aus 500 Teilen Wasser und 500 Teilen Eis ausgetragen. Es wird abgesaugt und mit einer Mischung aus 300 Teilen Wasser, 200 Teilen Eis und 10 Teilen konzentrierter Salzsäure gewaschen.

Der feuchte Nutschkuchen wird in 100 Teile Wasser und 100 Teile Eis eingerührt und bei 0°C durch Zugabe 15 %iger Natronlauge auf einen pH-Wert von 7,0 gebracht. Anschließend werden 19,9 Teile N-Methyl-N-(3-aminopropyl)-ethanolamin zugetropft und der pH-Wert durch Zugabe von 15 %iger Natronlauge bei 10,8 bis 11,0 3 Stunden lang bei Raumtemperatur gehalten. Nach 1 Stunde Rühren bei 60°C und einem pH-Wert von 10,5 wird auf 20 bis 30°C abgekühlt. Der pH-Wert wird durch Zugabe 15 %iger Natronlauge auf 12,0 gebracht. Es wird mit 2,5 Teilen eines handelsüblichen Klärhilfsmittels auf Kieselgur-Basis (z.B. Dicalite®) versetzt, nach 0,5 Stunden Rühren abfiltriert und der Rückstand mit 20 Teilen Wasser gewaschen.

Es werden als Filtrat 570 Teile einer erfindungsgemäßen Lösung erhalten, die den Farbstoff, der in Form seiner freien Säure der ungefähren Formel 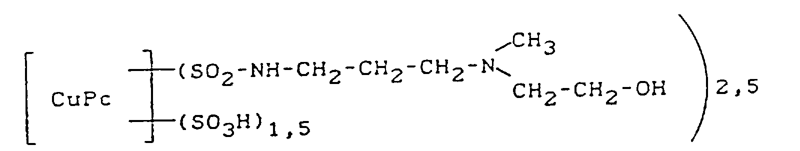 entspricht (λₘₐₓ: 623, 663 - H₂O/pH 2,5), enthält. Auch diese Farbstoff-Lösung liefert z.B. nach dem Verfahren des Beispiels 2 eine gleichmäßige, brillante türkisblaue Färbung.

### Beispiel 7

35,9 Teile Kupferphthalocyanin 96 %ig (34,5 g 100 %ig) werden innerhalb 1 Stunde unter Rühren in 187,1 Teile Chlorsulfonsäure eingetragen und innerhalb von 1,5 Stunden auf 138°C erwärmt. Nach 8 Stunden Rühren bei 138°C wird auf 85°C abkühlen lassen und während 2 Stunden bei 85 bis 88°C tropfenweise mit 23,6 Teilen Thionylchlorid versetzt.

Anschließend wird auf 90 bis 92°C erwärmt und 4 Stunden bei dieser Temperatur gerührt. Nach Abkühlung auf 20 bis 30°C wird die Reaktionsmischung unter Rühren auf eine Mischung aus 250 Teilen Wasser und 250 Teilen Eis ausgetragen. Durch laufende Zugabe von 400 Teilen Eis wird die Temperatur bei -2°C bis 0°C gehalten. Es wird abgesaugt und mit 300 Teilen Eiswasser (200 Teile Wasser und 100 Teile Eis) gewaschen.

Der feuchte Nutschkuchen wird in 90 Teile Wasser und 90 Teile Eis eingerührt und bei 0°C durch Zugabe 15 %iger Natronlauge auf einen pH-Wert von 7 gebracht. Nach Zugabe von 25 Teilen Eis werden in 15 Minuten 21,3 Teile N-(Hydroxyethyl)trimethylendiamin zugetropft. Hierbei steigt der pH-Wert auf 10,4. Durch Zutropfen von 15 %iger Natronlauge wird der pH-Wert auf 10,8 bis 11,0 eingestellt. Die Temperatur wird innerhalb 1 Stunde auf 20 bis 25°C ansteigen lassen und 3 Stunden bei 20 bis 25°C gehalten. Während dieser Zeit wird der pH-Wert durch Zutropfen 15 %iger Natronlauge bei 10,8 bis 11,0 gehalten. Anschließend wird in 1 Stunde auf 60°C erwärmt und anschließend 1 Stunde bei dieser Temperatur gerührt (pH-Wert immer bei 10,8 bis 11,0). Nach dem Abkühlen auf 20 bis 25°C wird mit 5 %iger Salzsäure der pH-Wert auf 7,5 gebracht. Nach 1 Stunde wird der ausgefallene Farbstoff, der in der Form seiner freien Säure der ungefähren Formel 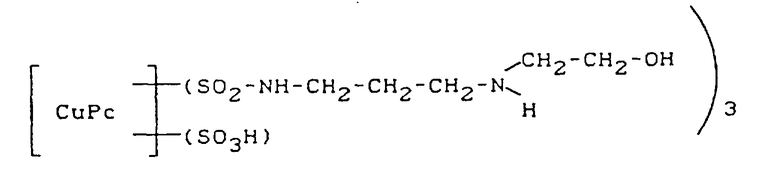 entspricht (λₘₐₓ: 619, 664 - H₂O/pH 12,5), abgesaugt und zweimal mit wenig Wasser gewaschen. Der feuchte Nutschkuchen wird mit Wasser auf 600 Teile Gesamtgewicht gebracht und unter Rühren durch Zugabe von 15 %iger Natronlauge auf einen pH-Wert von 12,5 gebracht. Nach Auffüllen mit Wasser auf 710 Teile wird eine erfindungsgemäße 10 %ige Lösung obigen Farbstoffs erhalten.

Ersetzt man im obigen Beispiel die 21,3 Teile N-(Hydroxyethyl)-trimethylendiamin durch 18,8 Teile N-(Hydroxyethyl)-ethylendiamin und füllt zum Schluß auf 690 Teile statt auf 710 Teile auf, so erhält man eine erfindungsgemäße Flüssigformierung, die den Farbstoff, der in der Form seiner freien Säure der ungefähren Formel 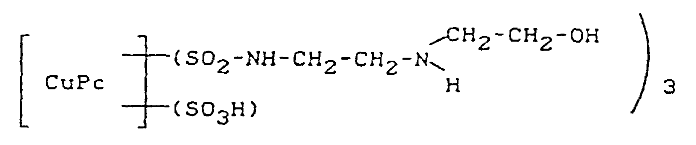 entspricht, als stabile ca. 10 %ige Lösung enthält.

## Patentansprüche

1. Konzentrierte wäßrige Farbstoff-Lösung, dadurch gekennzeichnet, daß sie eine oder mehrere Kupferphthalocyanin-Verbindungen enthält, die in Form der freien Säure der Formel 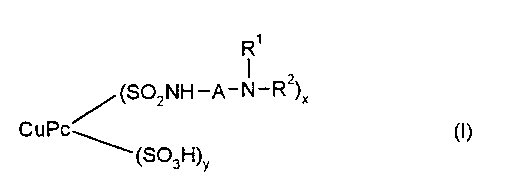 worin
CuPc für einen Kupferphthalocyanin-Rest steht,
A für gegebenenfalls substituiertes geradkettiges oder verzweigtes C₂-C₆-Alkylen steht,
R¹ und R² unabhängig voneinander für Wasserstoff, jeweils gegebenenfalls substituiertes geradkettiges oder verzweigtes C₁-C₆-Alkyl oder C₁-C₆-Hydroxyalkyl stehen, mit der Maßgabe, daß mindestens ein Rest R¹ oder R² für gegebenenfalls substituiertes geradkettiges oder verzweigtes C₁-C₆-Hydroxyalkyl steht,
x für 1 bis 3,5 und
y für 0,5 bis 3 steht, und die Summe von x und y 2,5 bis 4 beträgt,
entsprechen, und einen pH-Wert von 8 bis 13, vorzugsweise von 11 bis 13, aufweist,
wobei als Substituenten für geradkettiges oder verzweigtes C₂-C₆-Alkylen in der Definition von A OH oder C₁-C₆-Alkoxy und
als Substituenten für geradkettiges oder verzweigtes C₁-C₆-Alkyl und C₁-C₆-Hydroxyalkyl in der Definition von R¹ und R² OH, C₁-C₆-Alkoxy, Amino, C₁-C₆-Alkylamino, C₁-C₆-Dialkylamino oder Sulfato in Frage kommen.

2. Farbstoff-Lösung des Anspruchs 1, dadurch gekennzeichnet, daß sie eine oder mehrere Verbindungen der Formel (I) enthält, worin
A für Ethylen oder Propylen steht,
R¹ für Wasserstoff oder gegebenenfalls durch Hydroxy substituiertes, geradkettiges oder verzweigtes C₁-C₃-Alkyl steht, und
R² für -CH₂CH₂OH steht.

3. Farbstoff-Lösung des Anspruchs 1, dadurch gekennzeichnet, daß sie eine oder mehrere Verbindungen der Formel (II) 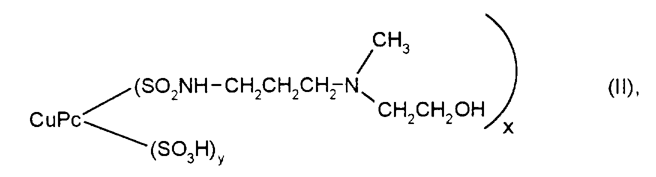 worin
CuPc, x und y die in Anspruch 1 angegebene Bedeutung haben,
enthält.

4. Farbstoff-Lösung des Anspruchs 1, dadurch gekennzeichnet, daß der pH-Wert durch Zugabe von Alkalihydroxid eingestellt wurde.

5. Verfahren zum Färben von cellulosehaltigem Material, dadurch gekennzeichnet, daß eine Farbstoff-Lösung gemäß Anspruch 1 eingesetzt wird.

6. Verfahren gemäß Anspruch 5, dadurch gekennzeichnet, daß es sich bei dem cellulosehaltigen Material um Papier oder Zellstoff handelt.

7. Verfahren gemäß Ansprüchen 5 und 6, dadurch gekennzeichnet, daß das Papier oder der Zellstoff in der Masse gefärbt wird.

8. Verfahren gemäß Ansprüchen 5 und 6, dadurch gekennzeichnet, daß das Papier oder der Zellstoff in der Oberfläche gefärbt wird.

## Claims

1. Concentrated aqueous dyestuff solution, ,characterized in that it comprises one or more copper phthalocyanine compounds which, in the form of the free acid, correspond to the formula 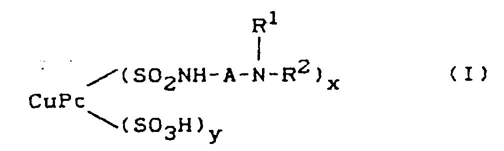 wherein
CuPc represents a copper phthalocyanine radical,
A represents optionally substituted straight-chain or branched C₂-C₆-alkylene,
R¹ and R² independently of one another represent hydrogen or in each case optionally substituted straight-chain or branched C₁-C₆-alkyl or C₁-C₆-hydroxyalkyl, with the proviso that at least one radical R¹ or R² represents optionally substituted straight-chain or branched C₁-C₆-hydroxyalkyl,
x represents 1 to 3.5,
y represents 0.5 to 3, and the sum of x and y is 2.5 to 4,
and has a pH of 8 to 13, preferably 11 to 13,
suitable substituents for straight-chain or branched C₂-C₆-alkylene in the definition of A being OH or C₁-C₆-alkoxy and
suitable substituents for straight-chain or branched C₁-C₆-alkyl and C₁-C₆-hydroxyalkyl in the definition of R¹ and R² being OH, C₁-C₆-alkoxy, amino, C₁-C₆-alkylamino, C₁-C₆-dialkylamino or sulphato.

2. Dyestuff solution according to Claim 1, characterized in that it comprises one or more compounds of the formula (I) wherein
A represents ethylene or propylene,
R¹ represents hydrogen or straight-chain or branched C₁-C₃-alkyl which is optionally substituted by hydroxyl and
R² represents -CH₂CH₂OH.

3. Dyestuff solution according to Claim 1, characterized in that it comprises one or more compounds of the formula (II) 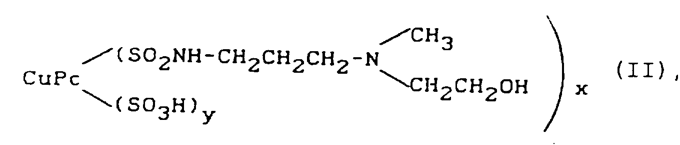 where
CuPc, x and y have the meaning given in Claim 1.

4. Dyestuff solution according to Claim 1, characterized in that the pH has been adjusted by addition of an alkali metal hydroxide.

5. Process for dyeing cellulose-containing material, characterized in that a dyestuff solution according to Claim 1 is employed.

6. Process according to Claim 5, characterized in that the cellulose-containing material is paper or cellulose.

7. Process according to Claims 5 and 6, characterized in that the paper or cellulose is dyed in the pulp.

8. Process according to Claims 5 and 6, characterized in that the paper or cellulose is dyed on the surface.

## Revendications

1. Solution aqueuse concentrée de colorants, caractérisée en Ce qu'elle contient un ou plusieurs composés de phtalocyanine de cuivre qui, sous forme de l'acide libre, correspondent à la formule 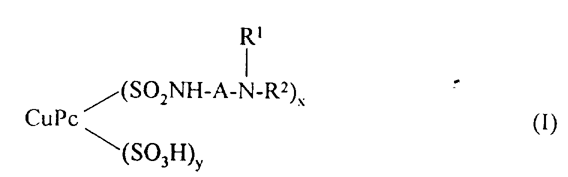 où
CuPc représente un reste phtalocyanine de cuivre,
A représente un alkylène en C₂-C₆ linéaire ou ramifié éventuellement substitué,
R¹ et R² représentent indépendamment l'un de l'autre l'hydrogène, un alkyle en C₁-C₆ ou hydroxyalkyle en C₁-C₆ linéaire ou ramifié éventuellement substitué, avec la condition qu'au moins un reste R¹ ou R² représente un hydroxyalkyle en C₁-C₆ linéaire ou ramifié éventuellement substitué,
x représente 1 à 3,5 et
y représente 0,5 à 3, et la somme de x et y est de 2,5 à 4,
et présente un pH de 8 à 13, de préférence de 11 à 13,
OH ou alcoxy en C₁-C₆ étant envisagé comme substituants pour l'alkylène en C₂-C₆ linéaire ou ramifié dans la définition de A et
OH, alcoxy en C₁-C₆, amino, alkylamino en C₁-C₆, dialkylamino en C₁-C₆ ou sulfato étant envisagé comme substituants pour l'alkyle en C₁-C₆ ou l'hydroxy-alkyle en C₁-C₆ linéaire ou ramifié dans la définition de R¹ et R².

2. Solution de colorants de la revendication 1, caractérisée en ce qu'elle contient un ou plusieurs composés de formule (I) où
A représente un éthylène ou propylène,
R¹ représente l'hydrogène ou un alkyle en C₁-C₃ linéaire ou ramifié, éventuellement substitué par hydroxyle, et
R² représente -CH₂CH₂OH.

3. Solution de colorants selon la revendication 1, caractérisée en ce qu'elle contient un ou plusieurs composés de formule (II) 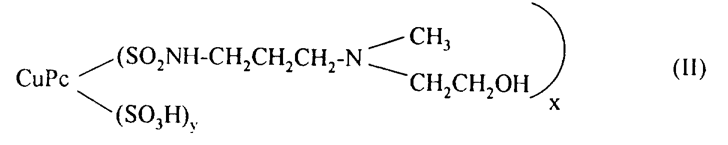 où CuPc, x et y ont la signification indiquée dans la revendication 1.

4. Solution de colorants de la revendication 1, caractérisée en ce que le pH a été ajusté par addition d'un hydroxyde alcalin.

5. Procédé pour teindre une matière cellulosique, caractérisé en ce qu'une solution de colorants selon la revendication 1 est utilisée.

6. Procédé selon la revendication 5, caractérisé en ce que, concernant la matière cellulosique, il s'agit de papier ou de cellulose.

7. Procédé selon les revendications 5 et 6, caractérisé en ce que le papier ou la cellulose est teint dans la masse.

8. Procédé selon les revendications 5 et 6, caractérisé en ce que le papier ou la cellulose et teint en surface.
